(19) **Europäisches Patentamt**
**European Patent Office**
**Office européen des brevets**

(11) **EP 4 317 248 A1**

(12) **EUROPEAN PATENT APPLICATION**
published in accordance with Art. 153(4) EPC

(43) Date of publication:
**07.02.2024 Bulletin 2024/06**

(21) Application number: **22775460.3**

(22) Date of filing: **18.03.2022**

(51) International Patent Classification (IPC):
$C08G\ 63/91^{(2006.01)}$    $C08G\ 63/12^{(2006.01)}$
$C08G\ 63/183^{(2006.01)}$    $C08G\ 63/42^{(2006.01)}$
$C08G\ 63/672^{(2006.01)}$    $C08G\ 63/78^{(2006.01)}$
$C08G\ 63/85^{(2006.01)}$    $C09D\ 167/02^{(2006.01)}$
$C09J\ 167/02^{(2006.01)}$

(52) Cooperative Patent Classification (CPC):
**C08G 63/672; C08G 63/127; C08G 63/181;
C08G 63/183; C08G 63/668; C08G 63/916;
C09D 167/02**

(86) International application number:
**PCT/JP2022/012654**

(87) International publication number:
**WO 2022/202672 (29.09.2022 Gazette 2022/39)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **22.03.2021 JP 2021047375
22.09.2021 JP 2021154388**

(71) Applicant: **Mitsubishi Chemical Corporation
Chiyoda-ku
Tokyo 100-8251 (JP)**

(72) Inventors:
• **TAMURA, Yoko
Tokyo 100-8251 (JP)**
• **KAWAI, Yuka
Tokyo 100-8251 (JP)**

(74) Representative: **Hoffmann Eitle
Patent- und Rechtsanwälte PartmbB
Arabellastraße 30
81925 München (DE)**

(54) **POLYESTER RESIN, METHOD FOR MANUFACTURING SAME, AND COATING**

(57) A polyester resin containing a constitutional unit derived from at least one of a polyhydric alcohol derived from biomass and a polyvalent carboxylic acid derived from biomass, and a constitutional unit derived from polyethylene terephthalate, in which a ratio of carbon atoms derived from the polyethylene terephthalate is 5% to 40% with respect to 100% of all carbon atoms, and a methyl ethyl ketone insoluble matter is 5% by mass or less,.

EP 4 317 248 A1

**Description**

[Technical Field]

The present invention relates to a polyester resin and a method of producing the same, and a paint.
This application claims the benefit of priority of the prior Japanese Patent Application No. 2021-047375, filed in Japan on March 22, 2021, and Japanese Patent Application No. 2021-154388, filed September 22, 2021, the entire contents of which are incorporated herein by reference.

[Background Art]

Due to having excellent properties, a polyester resin is used as a raw material of a fiber, a film, or the like, and is also widely used as a binder resin of a paint, an ink, a toner, or the like. In recent years, from the viewpoint of reduction of the amount of emitted $CO_2$ and the like, a raw material derived from biomass and a technique using a recycled raw material have attracted attention.
For example, Japanese Unexamined Patent Application, First Publication No. 2010-285555 proposes a toner that uses a polyester resin obtained by copolymerizing isosorbide derived from biomass and describes that a toner having favorable fixability, favorable hot offset resistance, and favorable storage stability is obtained while reducing an environmental load. In addition, Japanese Unexamined Patent Application, First Publication No. 2002-155133 proposes a method of producing a polyester resin by introducing recycled PET into a device together with other raw materials.
On the other hand, in a case where isosorbide is used as a raw material of a polyester resin, phenomena such as the easy coloring of the polyester resin to brown and the deterioration of the solvent solubility occur. Regarding the coloring of the polyester resin, for example, Published Japanese Translation No. 2017-533320 of the PCT International Publication discloses an attempt to reduce the coloring of the polyester resin using isosorbide by devising a catalyst. In addition, regarding the phenomenon that the solvent solubility is decreased, Japanese Unexamined Patent Application, First Publication No. 2010-095696 proposes a solvent-soluble polyester obtained by copolymerizing isosorbide.

[Citation List]

[Patent Documents]

[Patent Document 1] Japanese Unexamined Patent Application, First Publication No. 2010-285555
[Patent Document 2] Japanese Unexamined Patent Application, First Publication No. 2002-155133
[Patent Document 3] Japanese Unexamined Patent Application, First Publication No. 2017-533320
[Patent Document 4] Japanese Unexamined Patent Application, First Publication No. 2010095696

[Summary of Invention]

[Technical Problem]

Regarding the point that the resin is easily colored to brown at the time of the isosorbide copolymerization, the brownness of the resin was not a problem in the technique of Japanese Unexamined Patent Application, First Publication No. 2010-285555 because the evaluation was carried out in terms of magenta. However, it has not been revealed whether the resin can be used in a use application in terms of light color. In addition, it is widely known that the catalyst that is used in the technique of Published Japanese Translation No. 2017-533320 of the PCT International Publication is expensive, and thus another technique is expected.
In addition, regarding the point that the solvent solubility is low, in order to achieve dissolution in a general-purpose solvent such as methyl ethyl ketone (hereinafter, also referred to as "MEK") in the technique of Japanese Unexamined Patent Application, First Publication No. 2010-095696, it is necessary to suppress the copolymerization amount of the isosorbide to less than 30% by mole with respect to 100% by mole of the total acid components that are used in the copolymerization. Further, only an example in which organic tin, which may have an adverse effect on the human body or the environment, is used as a catalyst is described, but a resin obtained without using the catalyst is not disclosed.
Further, regarding the utilization of PET, organic tin or a lead-containing substance, which may have an adverse effect on the human body or the environment, is used as a catalyst in the technique of Japanese Unexamined Patent Application, First Publication No. 2002-155133. When the catalyst is not used, the producing time becomes long, and it is not clear whether a resin can be obtained in a short time in the same manner when another catalyst not having the above-described concern is used. In addition, in the technique of Japanese Unexamined Patent Application, First Publication No. 2002-155133, no mention is made regarding a raw material other than the recycled polyethylene terephthalate, and thus there is room for study from the viewpoint of the reduction of environmental load.

An object of the present invention is to provide a polyester resin having favorable solvent solubility, excellent preservability, and a light tint, which can also be used for light-colored ink, paint, and the like while considering the environment and safety by reducing a using amount of a raw material derived from petroleum, and a method of producing the polyester resin, a paint, an ink, a viscous adhesive, and an image forming material.

[Solution to Problem]

The present invention has the following aspects.

[1] A polyester resin including a constitutional unit derived from at least one of a polyhydric alcohol derived from biomass and a polyvalent carboxylic acid derived from biomass; and a constitutional unit derived from polyethylene terephthalate, in which a ratio of carbon atoms derived from the polyethylene terephthalate is 5% to 40% with respect to 100% of all carbon atoms, and a methyl ethyl ketone insoluble matter is 5% by mass or less.
[2] The polyester resin according to [1], in which the constitutional unit derived from the polyhydric alcohol derived from biomass is a constitutional unit derived from a polyhydric alcohol containing a heterocycle.
[3] The polyester resin according to [1] or [2], in which the polyhydric alcohol derived from biomass is at least one of isosorbide and erythritane.
[4] The polyester resin according to any one of [1] to [3], in which the constitutional unit derived from the polyvalent carboxylic acid derived from biomass is a constitutional unit derived from a polyvalent carboxylic acid containing a heterocycle.
[5] The polyester resin according to any one of [1] to [4], in which the polyvalent carboxylic acid derived from biomass is at least one of succinic acid and 2,5-furandicarboxylic acid.
[6] The polyester resin according to any one of [1] to [5], in which a ratio of carbon atoms which are derived from the polyhydric alcohol derived from biomass and are derived from the polyvalent carboxylic acid derived from biomass is 1% to 95% with respect to all carbon atoms contained in the polyester resin.
[7] The polyester resin according to any one of [1] to [6], in which a ratio of carbon atoms which are derived from the polyhydric alcohol derived from biomass, are derived from the polyvalent carboxylic acid derived from biomass, and are derived from the polyethylene terephthalate is 6% to 100% with respect to all carbon atoms contained in the polyester resin.
[8] The polyester resin according to any one of [1] to [7], in which when the polyester resin having a particle diameter of 1 to 2 mm is fractionated by sieving and subjected to measurement with a spectrocolorimeter, an L value is 40 or more, and an a value is 2.4 or less.
[9] A paint including the polyester resin according to any one of [1] to [8], and a solvent.
[10] An ink including the polyester resin according to any one of [1] to [8].
[11] A viscous adhesive including the polyester resin according to any one of [1] to [8].
[12] An image forming material including the polyester resin according to any one of [1] to [8].
[13] A method of producing a polyester resin, including a reaction step that is at least one of an esterification reaction and a transesterification reaction, in which a raw material containing at least one of a polyhydric alcohol derived from biomass and a polyvalent carboxylic acid derived from biomass and containing polyethylene terephthalate is reacted in a presence of a titanium compound; and a step in which a reactant obtained in the reaction step is polycondensed,
in which a ratio of carbon atoms derived from the polyethylene terephthalate is 5% to 40% with respect to a total carbon atom amount of the raw material, and at least a part of the reaction step is carried out at a temperature equal to or higher than a melting point of polyethylene terephthalate.
[14] The production method according to [13], in which the polyhydric alcohol derived from biomass is a polyhydric alcohol containing a heterocycle.
[15] The production method according to [14], in which the polyhydric alcohol derived from biomass is at least one of isosorbide and erythritane.
[16] The production method according to [13], in which wherein the polyvalent carboxylic acid derived from biomass is a polyvalent carboxylic acid containing a heterocycle.
[17] The production method according to [16], in which the polyvalent carboxylic acid derived from biomass is at least one of succinic acid and 2,5-furandicarboxylic acid.
[18] The production method according to any one of [14] to [17], in which a time of the reaction step is within 3 hours.

As other aspects, the present invention has the following aspects.

[1-1] A polyester resin containing a constitutional unit derived from polyethylene terephthalate and a constitutional unit derived from polyhydric alcohol including isosorbide, in which a ratio of carbon atoms derived from the polyethylene terephthalate is 5% to 40%, a methyl ethyl ketone insoluble matter is 5% by mass or less, an L value is 40 or more, and an a value is 2.4 or less.

[1-2] The polyester resin according to [1-1], in which a constitutional unit derived from a polyvalent carboxylic acid is contained.

[1-3] The polyester resin according to [1-1] or [1-2], in which a ratio of carbon atoms derived from the isosorbide is 1% to 30% with respect to all carbon atoms contained in the polyester resin.

[1-4] The polyester resin according to any one of [1-1] to [1-3], in which at least a part of at least one of the constitutional unit derived from polyethylene terephthalate and the constitutional unit derived from polyhydric alcohol including isosorbide is derived from biomass, and a ratio of carbon atoms derived from biomass is 1% to 95% with respect to all carbon atoms contained in the polyester resin.

[1-5] The polyester resin according to [1-2] or [1-3], in which at least a part of at least one of the constitutional unit derived from polyethylene terephthalate, the constitutional unit derived from polyhydric alcohol including isosorbide, and the constitutional unit derived from the polyvalent carboxylic acid is derived from biomass, and a ratio of carbon atoms derived from biomass is 1% to 95% with respect to all carbon atoms contained in the polyester resin.

[1-6] A paint including the polyester resin according to any one of [1-1] to [1-5]; and a solvent.

[1-7] A method of producing a polyester resin, including an esterification step of reacting a raw material containing polyethylene terephthalate and a polyhydric alcohol including isosorbide in a presence of a titanium compound; and a step in which a reactant obtained in the esterification step is polycondensed, and in which a ratio of carbon atoms derived from the polyethylene terephthalate is 5% to 40% with respect to a total carbon atom amount of the raw material, and at least a part of the esterification step is carried out at a temperature equal to or higher than a melting point of polyethylene terephthalate.

[1-8] The production method according to [1-7], in which the raw material contains a polyvalent carboxylic acid.

[1-9] The production method according to [1-7] or [1-8], in which a time of the esterification step is within 3 hours.

As other aspects, the present invention has the following aspects.

[2-1] A polyester resin including a constitutional unit derived from polyethylene terephthalate; and a constitutional unit derived from a monomer derived from biomass, in which a ratio of carbon atoms derived from the monomer derived from biomass is 30.0% to 90.0% with respect to all carbon atoms that constitute the polyester resin, and the monomer derived from biomass includes at least erythritane.

[2-2] The polyester resin according to [2-1], in which a ratio of carbon atoms derived from the erythritane is 5.0% to 35.0% with respect to all carbon atoms that constitute the polyester resin.

[2-3] The polyester resin according to [2-1] or [2-2], in which a ratio of carbon atoms derived from a monomer derived from petroleum is 30.0% or less with respect to all carbon atoms that constitute the polyester resin.

[2-4] The polyester resin according to any one of [2-1] to [2-3], in which a ratio of carbon atoms derived from the polyethylene terephthalate is 10.0% to 50.0% with respect to all carbon atoms that constitute the polyester resin.

[2-5] The polyester resin according to any one of [2-1] to [2-4], in which a glass transition temperature is 30°C to 80°C.

[2-6] A method of producing a polyester resin, including a step of reacting a raw material mixture which contains polyethylene terephthalate and a monomer derived from biomass, in which a ratio of carbon atoms derived from the monomer derived from biomass is 30.0% to 90.0% with respect to all carbon atoms of the raw material mixture, and the monomer derived from biomass includes at least erythritane.

[2-7] The method of producing a polyester resin according to [2-6], in which a ratio of carbon atoms derived from erythritane is 5.0% to 35.0% with respect to all carbon atoms of the raw material mixture.

[2-8] The method of producing a polyester resin according to [2-6] or [2-7], in which a ratio of carbon atoms derived from a monomer derived from petroleum is 30.0% or less with respect to all carbon atoms of the raw material mixture.

[2-9] The method of producing a polyester resin according to any one of [2-6] to [2-8], in which a ratio of carbon atoms derived from the polyethylene terephthalate is 10.0% to 50.0% with respect to all carbon atoms of the raw material mixture.

[Advantageous Effects of Invention]

According to the present invention, it is possible to provide a polyester resin having favorable solvent solubility and a light tint, which can also be used for light-colored ink, paint, and the like, and a method of producing the polyester resin, a paint, an ink, a viscous adhesive, and an image forming material.

[Description of Embodiments]

Polyester resin

A polyester resin according to a first aspect of the present invention contains a constitutional unit derived from at least one of a polyhydric alcohol derived from biomass and a polyvalent carboxylic acid derived from biomass and a constitutional unit derived from polyethylene terephthalate (hereinafter, also referred to as "PET"), where a ratio of carbon atoms derived from the polyethylene terephthalate is 5% to 40% with respect to 100% of all carbon atoms, and a methyl ethyl ketone insoluble matter is 5% by mass or less.

The polyester resin according to the first aspect of the present invention contains, as a raw material, a mixture M that contains PET and at least one of a polyhydric alcohol component derived from biomass and a polyvalent carboxylic acid component derived from biomass. As another aspect, the mixture M may contain PET, a polyhydric alcohol component that is at least one of isosorbide and erythritane which are derived from biomass, and a polyvalent carboxylic acid component derived from biomass. That is, the polyester resin is a reaction product of the mixture M. At least a part of monomers contained in the mixture M are monomers derived from biomass. The mixture M may contain a monomer derived from petroleum.

The term "monomer derived from biomass" refers to a monomer generated from a plant as a raw material. The carbon atoms that constitute the monomer derived from biomass are derived from a plant.

The term "monomer derived from petroleum" refers to a monomer generated from petroleum as a raw material, excluding PET and the monomer derived from biomass. The carbon atoms that constitute the monomer derived from petroleum are derived from petroleum.

Polyethylene terephthalate

As the PET, it is possible to use those produced according to a conventional method, for example, by esterification or transesterification of ethylene glycol with terephthalic acid, dimethyl terephthalate, or the like, as well as polycondensation.

As the PET, an unused PET may be used, or a recycled PET obtained by reusing (that is, recycling) a used PET or a PET product may be used. In addition, as the PET, a PET using a raw material derived from biomass may be used, or amorphous polyethylene terephthalate (A-PET), crystalline polyethylene terephthalate (C-PET), or glycol-modified polyethylene terephthalate (G-PET) may be used.

As the recycled PET, a recycled PET obtained by processing a used PET into a pellet shape may be used, or a recycled PET obtained by crushing products such as films and bottles or offcuts may be used. Examples of the PET using a raw material derived from biomass include a PET in which at least one of ethylene glycol and terephthalic acid is derived from biomass. It is possible to check whether or not PET uses a raw material derived from biomass, for example, according to ASTM D6866 "Standard for Determining Biobased Carbon Concentration Using Radiocarbon (C14) Measuring Method".

From the viewpoint of environmental protection, the PET is preferably a recycled PET or a PET using a raw material derived from biomass. The PET using a raw material derived from biomass may be an unused one or may be a used one.

One kind of PET may be used alone, or two or more kinds thereof may be used in combination.

The content of the carbon atoms derived from PET, that is, the ratio of carbon atoms derived from PET is 5% to 40% with respect to all carbon atoms in the mixture M. The PET is such one in which an ethylene skeleton derived from ethylene glycol forms an ester bond to a benzene ring having a functional group at the para-position, which is derived from terephthalic acid or a lower alkyl ester of the terephthalic acid. As a result, in a case where PET is partially used and polymerization is carried out together with a polyvalent carboxylic acid component and a polyhydric alcohol component, a random polymer is rapidly formed by a transesterification reaction. In a case of setting the ratio of carbon atoms derived from PET to 5% or more with respect to all carbon atoms in the mixture M, it is possible to contribute to the shortening of the polymerization time and to suppress the coloring of the resin due to heating at the time of the polymerization. In addition, in a case of setting the content of carbon atoms derived from PET to 40% or less with respect to all carbon atoms in the mixture M, the solvent solubility of the polyester resin to be obtained is favorable. The content of the carbon atoms derived from PET is more preferably 30% or less and still more preferably 5% to 30% with respect to all carbon atoms in the mixture M.

It is noted that the ratio of carbon atoms derived from PET to all carbon atoms in the mixture M can be calculated based on the number of carbon atoms and the molar ratio of each component that constitutes the mixture M. The ratio of carbon atoms derived from isosorbide, the ratio of carbon atoms derived from erythritane, and the ratio of carbon atoms of a monomer derived from biomass, which will be described later, can be calculated in the same manner.

From the viewpoint of controlling the crystallinity of the polyester resin to be obtained, an intrinsic viscosity (IV) value of the PET that can be used in the present invention is preferably 0.2 to 1.2, more preferably 0.3 to 1.1, still more preferably 0.4 to 0.8, and most preferably 0.4 to 0.6.

The IV value of PET is a value obtained by subjecting a solution, which is obtained by dissolving 0.3 g of PET in 30 mL of a mixed solvent in which phenol and 1,1,2,2-tetrachloroethane have been mixed at a mass ratio of 1:1, to measurement at 30°C using an Ubbelohde viscometer.

Polyvalent carboxylic acid component derived from biomass

Examples of the polyvalent carboxylic acid derived from biomass include a divalent carboxylic acid and a trivalent or higher valent carboxylic acid. Examples of the divalent carboxylic acid include aromatic dicarboxylic acids such as isomers (specifically, 1,4-,1,5-,1,6-,1,7-, 2,5-, 2,6-, 2,7-, and 2,8- isomers) of terephthalic acid, isophthalic acid, and naphthalenedicarboxylic acid, and lower alkyl esters or acid anhydrides thereof; and aliphatic dicarboxylic acids such as succinic acid, isodecyl succinic acid, dodecenyl succinic acid, maleic acid, fumaric acid, adipic acid, sebacic acid, and 2,5-furandicarboxylic acid, and lower alkyl esters or acid anhydrides thereof.

Examples of the lower alkyl esters of terephthalic acid and isophthalic acid include dimethyl terephthalate, dimethyl isophthalate, diethyl terephthalate, diethyl isophthalate, dibutyl terephthalate, and dibutyl isophthalate.

Among these, the divalent carboxylic acid is preferably a polyvalent carboxylic acid containing a heterocycle. In addition, from the viewpoint of excellence in handleability and cost, terephthalic acid, isophthalic acid, adipic acid, 2,5-furandicarboxylic acid, or succinic acid is preferable, and 2,5-furandicarboxylic acid or succinic acid is more preferable.

One kind of divalent carboxylic acid may be used alone, or two or more kinds thereof may be used in combination. In addition, it may be used in combination with a trivalent or higher valent carboxylic acid described later.

Examples of the trivalent or higher valent carboxylic acid include trimellitic acid, pyromellitic acid, 1,2,4-cyclohexanetricarboxylic acid, 2,5,7-naphthalenetricarboxylic acid, 1,2,4-naphthalenetricarboxylic acid, 1,2,5-hexanetricarboxylic acid, 1,2,7,8-octanetetracarboxylic acid, and acid anhydrides and lower alkyl esters thereof.

Among these, the trivalent or higher valent carboxylic acid is preferably trimellitic acid, trimellitic acid anhydride, pyromellitic acid, or pyromellitic acid anhydride, and particularly preferably trimellitic acid or an anhydride thereof, from the viewpoint of the excellence in handleability and cost.

One kind of trivalent or higher valent carboxylic acid may be used alone, or two or more kinds thereof may be used in combination.

Polyhydric alcohol component derived from biomass

The polyhydric alcohol component derived from biomass includes ethylene glycol, propylene glycol, 1,3-propanediol, 1,4-butanediol, glycerin, isosorbide, isomannide, erythritane, sorbitol, erythritol, and the like, and it is preferably a polyhydric alcohol component containing a heterocycle. The polyhydric alcohol component derived from biomass is more preferably at least one of isosorbide and erythritane.

Examples of the isosorbide include D-isosorbide and L-isosorbide.

In the polyester resin, the content of the carbon atoms contained in the constitutional unit derived from isosorbide is preferably 1% to 30% with respect to all carbon atoms contained in the polyester resin. It is preferable to use 1% or more of carbon atoms contained in the constitutional unit derived from isosorbide in terms of the reduction of environmental load, which also has an effect of increasing the glass transition temperature (also referred to as Tg) of the polyester resin. In addition, in a case where the carbon atoms contained in the constitutional unit derived from isosorbide are set to 30% or less, the polyester resin tends to be difficult to be colored, or the solvent solubility tends to be favorable. The content of the carbon atoms contained in the constitutional unit derived from isosorbide is more preferably 5% to 25%.

It is preferable that erythritane is erythritane (1,4-anhydroerythritol) which is a monomer derived from biomass, which is synthesized by an intramolecular dehydration reaction of erythritol which is a natural polysaccharide.

In the polyester resin, the ratio of carbon atoms derived from erythritane is preferably 5% to 35% with respect to all carbon atoms constituting the polyester resin. A case where the ratio of carbon atoms derived from erythritane is 5% or more is preferable in terms of the reduction of environmental load, which also has an effect of increasing the glass transition temperature (also referred to as Tg) of the polyester resin. In addition, in a case where the ratio of carbon atoms derived from erythritane is 35% or less, the solvent solubility of the polyester resin to be obtained tends to be favorable. The ratio of carbon atoms derived from erythritane is more preferably 8% to 28% with respect to the all carbon atoms that constitute the polyester resin.

The polyhydric alcohol component may include a dihydric alcohol (hereinafter, also referred to as "another dihydric alcohol") other than isosorbide and erythritane, and a trihydric or higher hydric alcohol (also referred to as "another trihydric alcohol").

Examples of the other dihydric alcohol include aliphatic alcohols such as ethylene glycol, neopentyl glycol, propylene glycol, hexanediol, polyethylene glycol, 1,3-propanediol, 1,4-butanediol, diethylene glycol, triethylene glycol, 1,4-cyclohexanedimethanol, isomannide, and 1,4-dihydroxy-2-butene; and aromatic alcohols such as polyoxypropylene-(2.0)-2,2-bis(4-hydroxyphenyl)propane, polyoxypropylene-2-(2.2)-2,2-bis(4-hydroxyphenyl)propane, polyoxypropylene-(2.3)-2,2-bis(4-hydroxyphenyl)propane, polyoxypropylene-(2.4)-2,2-bis(4-hydroxyphenyl)propane, polyoxypropylene-(3.3)-2,2-bis(4-hydroxyphenyl)propane, polyoxypropylene-(6)-2,2-bis(4-hydroxyphenyl)propane, polyoxyethylene-(2.0)-2,2-bis(4-hydroxyphenyl)propane, polyoxyethylene-(2,2)-2,2-bis(4-hydroxyphenyl)propane, polyoxyethylene-(2,3)-2,2-bis(4-hydroxyphenyl)propane, and polyoxypropylene (2.2)-polyoxyethylene-(2.0)-2,2-bis(4-hydroxyphenyl)propane; and the like.

One kind of the other dihydric alcohol may be used alone, or two or more kinds thereof may be used in combination. In addition, it may be derived from petroleum or may be derived from biomass.

It is noted that the numerical value in parentheses after "ethylene" is the average number of moles of ethylene oxide added, and the number in parentheses after "propylene" is the average number of moles of propylene oxide added.

Examples of the trihydric or higher hydric alcohol include trimethylolpropane, sorbitol, 1,4-sorbitan, pentaerythritol, dipentaerythritol, tripentaerythritol, 1,2,4-butanetriol, 1,2,5-pentanetriol, glycerol, 2-methyl-1,2,3-propanetriol, 2-methyl-1,2,4-butanetriol, 1,3,5-trihydroxymethylbenzene, and glycerin.

One kind of the other trihydric or higher hydric alcohol may be used alone, or two or more kinds thereof may be used in combination. In addition, it may be derived from petroleum or may be derived from biomass.

In the polyester resin, the ratio of carbon atoms derived from the monomer derived from biomass is preferably 1% to 95% with respect to all carbon atoms contained in the mixture M from the viewpoint of the reduction of environmental load. In a case where the ratio of carbon atoms derived from the monomer derived from biomass is 1% or more, the effect of reducing the using amount of the monomer derived from petroleum can be enhanced. In addition, in a case where the ratio of carbon atoms derived from the monomer derived from biomass is 95% or less, the preservability and solvent solubility of the polyester resin to be obtained tend to be favorable. The ratio of carbon atoms derived from biomass is preferably 1% to 95% and may be 2% to 85% or may be 3% to 70% with respect to all carbon atoms contained in the polyester resin.

In addition, from the viewpoint of the reduction of environmental load, the ratio of carbon atoms which are derived from the polyhydric alcohol derived from biomass, are derived from the polyvalent carboxylic acid derived from biomass, and are derived from the polyethylene terephthalate is preferably 6% to 100% and more preferably 10% to 100% with respect to all carbon atoms contained in the polyester resin.

Other components

The mixture M may contain components (hereinafter, also referred to as other components) other than the PET, the polyvalent carboxylic acid component and the polyhydric alcohol component. That is, the polyester resin may contain constitutional units derived from the other components.

Examples of the other components include a monohydric carboxylic acid, a monohydric alcohol, and a monoester of a monovalent carboxylic acid and a monohydric alcohol.

Examples of the monovalent carboxylic acid include aromatic carboxylic acids having 30 or less carbon atoms, such as benzoic acid and p-methylbenzoic acid; aliphatic carboxylic acids having 30 or less carbon atoms such as stearic acid and behenic acid; and unsaturated carboxylic acids having one or more double bonds in the molecule, such as cinnamic acid, oleic acid, linoleic acid, and linolenic acid.

Examples of the monohydric alcohol include aromatic alcohols having 30 or less carbon atoms, such as benzyl alcohol; and aliphatic alcohols having 30 or less carbon atoms, such as oleyl alcohol, lauryl alcohol, cetyl alcohol, stearyl alcohol, and behenyl alcohol.

Examples of the monoester of the monohydric alcohol and the monohydric carboxylic acid include natural ester waxes such as carnauba wax and rice bran wax.

The other components may be derived from petroleum or biomass; however, they are more preferably derived from biomass.

Physical properties

The polyester resin according to the present embodiment has a MEK insoluble matter of 5% by mass or less. The MEK insoluble matter is preferably small and is most preferably 0% by mass.

In a case where the MEK insoluble matter is 5% by mass or less, the suitability for a solvent-based ink, a paint, or the like and for an application for being used by being dissolved in a solvent is enhanced. In addition, even assuming a case where a polyester resin is processed into an emulsion and used as an aqueous ink, paint binder, or the like, solvent solubility is essential when carrying out an emulsification treatment by a phase inversion emulsification method or the like, and the suitability is enhanced in a case of being set to 5% by mass or less.

In addition, in the polyester resin according to the first aspect of the present invention, it is preferable that the L value is 40 or more and the a value is +2.4 or less. Here, the L value and the a value are each a Hunter Lab value which is determined by fractionating a polyester resin having a particle diameter of 1 to 2 mm with sieving and subjecting it to measurement with a spectrocolorimeter (for example, CM-5 manufactured by Konica Minolta, Inc.) at a field of view of 2°.

The L value indicates lightness and is in a range of black (0) to white (100). The larger the numerical value, the higher the lightness.

The a value has a positive value in a case where the red color is strong and, it has a negative value in a case where the green color is strong.

The polyester resin according to the first aspect of the present application is a resin which has high lightness and has suppressed redness even when isosorbide, which is easily colored to brown, is copolymerized.

In the polyester resin of the present invention, it is preferable that both a solution dissolved in MEK at a solid content of 30% by mass and a solution dissolved in MEK at a solid content of 40% by mass are uniform solutions.

In a case where uniform MEK solutions are used, the suitability for a solvent-based ink, a paint, or the like and for an application for being used by being dissolved in a solvent is enhanced. In addition, even assuming a case where a polyester resin is processed into an emulsion and used as an aqueous ink, paint binder, or the like, solvent solubility is essential in a case of carrying out an emulsification treatment by a phase inversion emulsification method or the like, which enhances the emulsification suitability.

The uniform solution refers to a solution in such a state where no separation of the liquid phase is observed and no precipitates or few precipitates are observed in a case where it is allowed to stand.

From the viewpoint of the preservability of the polyester resin, the Tg of the polyester resin is preferably 30°C or higher, more preferably 40°C or higher, and still more preferably 50°C or higher. In addition, from the viewpoint of the ease of melting, the Tg of the polyester resin is preferably 100°C or lower and may be 80°C or lower. The upper limit value and the lower limit value of the preferred range of the Tg of the polyester resin can be combined in any combination. For example, the Tg of the polyester resin is preferably 30°C to 100°C.

The glass transition temperature of the polyester resin is determined as follows. That is, a differential scanning calorimeter (for example, "DSC60 Plus", manufactured by Shimadzu Corporation) is used to determine a temperature at the intersection point between a baseline on a low temperature side of a chart in a case where measurement is carried out at a temperature rising rate of 5°C/min and a tangential line of an endothermic curve near the glass transition temperature, and this temperature is taken as the glass transition temperature.

From the viewpoint of the preservability of the resin, the softening temperature (also referred to as T4) of the polyester resin is preferably 80°C or higher, more preferably 90°C or higher, and still more preferably 100°C or higher. In addition, it is preferably 170°C or lower and more preferably 150°C or lower from the viewpoint of the ease of melting. The upper limit value and the lower limit value of the T4 of the polyester resin can be combined in any combination. For example, the T4 of the polyester resin is preferably 90°C to 170°C, more preferably 90°C to 170°C, and still more preferably 100°C to 150°C.

The softening temperature of the polyester resin is determined as follows. That is, a flow tester (for example, "CFT-500D", manufactured by Shimadzu Corporation) is used to carry out measurement with a 1 mm$\varphi \times$ 10 mm nozzle at a load of 294 N (30 Kgf) and a constant temperature rise of a temperature rising rate of 3 °C/min, and a temperature at which a 1/2 amount of 1.0 g of the polyester resin has flowed out is measured, and this temperature is taken as the softening temperature.

The acid value (also referred to as "AV") of the polyester resin is preferably 1 to 40 mgKOH/g and more preferably 3 to 30 mgKOH/g. In a case where the acid value of the polyester resin is equal to or larger than the above-described lower limit value, the productivity of the polyester resin is improved. In a case where the acid value of the polyester resin is equal to or smaller than the above-described upper limit value, the moisture resistance of the polyester resin is improved, and the polyester resin is less affected by the usage environment.

It is noted that in a case where the acid value of the polyester resin is approximately 6 to 15 mgKOH/g, the neutralized phase inversion emulsification is possible, and the polyester resin is suitable for utilization as an emulsion.

The acid value of the polyester resin is an amount of potassium hydroxide required to neutralize carboxyl groups per 1 g of a specimen, which is expressed in terms of the number of milligrams, and it is indicated with a unit of mgKOH/g.

The acid value of the polyester resin is a value determined by dissolving the polyester resin in benzyl alcohol and carrying out a titration using a KOH solution of 0.02 N with cresol red as an indicator.

The hydroxyl group value (also referred to as OHV) of the polyester resin is preferably 10 to 70 mgKOH/g and more preferably 10 to 50 mgKOH/g. In a case where the hydroxyl group value of the polyester resin is equal to or larger than the above-described lower limit value, the productivity of the polyester resin is improved. In a case where the hydroxyl group value of the polyester resin is equal to or smaller than the above-described upper limit value, the moisture resistance of the polyester resin is improved, and the polyester resin is less affected by the usage environment.

The hydroxyl group value of the polyester resin is an amount of potassium hydroxide equivalent to the number of hydroxyl groups per 1 g of a specimen, which is expressed in terms of the number of milligrams, and it is indicated with a unit of mgKOH/g.

The hydroxyl group value of the polyester resin is a value obtained by dissolving the polyester resin in tetrahydrofuran, reacting it with acetic acid anhydride in the presence of dimethyl aminopyridine to acetylate the hydroxyl group, hydrolyzing the excessive acetic acid anhydride to obtain acetic acid, followed by titration using 0.5 N of a KOH solution with phenolphthalein as an indicator, and carrying out calculation from the consumption amount of acetic acid anhydride.

When the polyester resin is utilized as an emulsion, the particle diameter of the emulsion at the time when the phase inversion emulsification has been carried out is preferably 50 to 500 nm and more preferably 60 to 300 nm. In a case where the particle diameter of the emulsion at the time when the phase inversion emulsification has been carried out is 50 to 500 nm, the stability of the emulsion tends to be favorable, and thus the emulsion can be suitably used for aqueous ink, coating, and the like.

The particle diameter of the emulsion is measured using the emulsion obtained according to the following phase inversion emulsification method. In a glass beaker, a polyester resin is dissolved in MEK of an amount 3 times the amount of the polyester resin, and bases having an amount that makes it possible to neutralize carboxylic acids of the polyester resin to 100% or more are added to the beaker and sufficiently blended. As the bases, ammonia water, dimethylaminoethanol, sodium hydroxide, potassium hydroxide, and the like can be appropriately used. Next, pure water of an amount 4 times the amount of the polyester resin is put into a round bottom flask, and the MEK solution described above is put thereinto, followed by treatment with a homogenizer at 8,000 rpm for 10 minutes.

Next, a flask cover, a stirring blade, and a cooling tube are attached, MEK is distilled off by reducing the pressure with an aspirator while carrying out heating to 70°C in a water bath to obtain an emulsion consisting of only water and a resin, the particle diameter of the emulsion is measured using a laser diffraction/scattering-type particle size distribution analyzer (LA-960, manufactured by Horiba, Ltd.), and a median diameter (also referred to as $D_{50}$) is defined as the particle diameter of the emulsion. Method of producing polyester resin

A method of producing a polyester resin according to a second aspect of the present invention is a method of producing a polyester resin, including a reaction step that is at least one of an esterification reaction and a transesterification reaction, in which a raw material containing at least one of a polyhydric alcohol derived from biomass and a polyvalent carboxylic acid derived from biomass and containing polyethylene terephthalate is reacted in a presence of a titanium compound and a step in which a reactant obtained in the reaction step is polycondensed, where a ratio of carbon atoms derived from the polyethylene terephthalate is 5% to 40% with respect to a total carbon atom amount of the raw material, and at least a part of the reaction step is carried out at a temperature equal to or higher than a melting point of polyethylene terephthalate.

Hereinafter, an example of the method of producing a polyester resin according to the second aspect of the present invention will be described. The method of producing a polyester resin according to the present embodiment includes a step of reacting a mixture M which is a raw material containing at least one of the above-described polyhydric alcohol derived from biomass and the above-described polyvalent carboxylic acid derived from biomass and containing polyethylene terephthalate. The ratio of carbon atoms derived from PET is 5% to 40% with respect to the total carbon atom amount of the mixture M, that is, the raw material.

In the mixture M, the ratio of carbon atoms derived from the monomer derived from biomass is preferably 1% to 95%, more preferably 2% to 85%, and still more preferably 3% to 70%, with respect to all carbon atoms derived from the mixture M.

In the mixture M, the ratio of carbon atoms derived from PET is more preferably 5% to 30% with respect to all carbon atoms derived from the mixture M.

When the raw material mixture M contains erythritane, the ratio of carbon atoms derived from erythritane is preferably 5% to 35% and more preferably 8% to 28% with respect to all carbon atoms derived from the raw material mixture M.

When the raw material mixture M contains isosorbide, the ratio of carbon atoms derived from isosorbide is preferably 1% to 30% and more preferably 5% to 25% with respect to all carbon atoms derived from the raw material mixture M.

In the step of reacting the mixture M, it is preferable to carry out a polycondensation reaction after carrying out at least one of the esterification reaction and the transesterification reaction. Specifically, the mixture M, a titanium compound as a catalyst, and the like are put into a reaction container, the temperature is raised by heating to carry out at least one of the esterification reaction and the transesterification reaction, and water or alcohol generated in the reaction is removed. Thereafter, the polycondensation reaction is subsequently carried out, where at the time of the polycondensation reaction, the pressure inside the reactor is gradually reduced, and under a pressure of 150 mmHg (that is, 20 kPa) or less and preferably 15 mmHg (that is, 2 kPa) or less, the polycondensation is carried out while distilling off and removing the polyhydric alcohol component, whereby a polyester resin can be produced.

In the method of producing a polyester resin according to the second aspect of the present application, from the viewpoint of safety, only a titanium-based compound is used as a catalyst that is used at the time of the esterification reaction or the transesterification reaction, and the polycondensation reaction. Examples of the titanium-based compound include a titanium alkoxide compound having an alkoxy group, titanium carboxylate, titanyl carboxylate, a titanyl carboxylate salt, a titanium chelate compound, and the like.

Examples of the titanium alkoxide compound having an alkoxy group include tetramethoxy titanium, tetraethoxy titanium, tetrapropoxy titanium, tetrabutoxy titanium, tetrapentoxy titanium, and tetraoctoxy titanium.

Examples of the titanium carboxylate compound include titanium formate, titanium acetate, titanium propionate, titanium octateate, titanium oxalate, titanium succinate, titanium maleate, titanium adipate, titanium sebacate, titanium hexanetricarboxylate, titanium isooctanetricarboxylate, titanium octanetetracarboxylate, titanium decanetetracarboxylate, titanium benzoate, titanium phthalate, titanium terephthalate, titanium isophthalate, titanium 1,3-naphthalenedicarboxylate, titanium 4,4-biphenyldicarboxylate, titanium 2,5-toluenedicarboxylate, titanium anthracenedicarboxylate, titanium trimellitate, titanium 2,4,6-naphthalenetricarboxylate, titanium pyromellitate, and titanium 2,3,4,6-naphthalenetetracarboxylate. Among these, tetrabutoxy titanium is particularly preferable in terms of availability and the like.

One kind of the catalyst may be used alone, or two or more kinds thereof may be used in combination.

The polymerization temperature in the esterification reaction or the transesterification reaction is higher than the melting point of PET from the viewpoint of shortening the reaction time. The melting point of PET is around 255°C. The polymerization temperature in the esterification reaction or the transesterification reaction is preferably 260°C or higher and more preferably 265°C or higher. In addition, the upper limit of the polymerization temperature in the esterification reaction or the transesterification reaction is preferably 290°C or lower and more preferably 280°C or lower. The polymerization temperature at the time of the polycondensation reaction is preferably 180°C to 280°C, more preferably 200°C to 270°C, and particularly preferably 210°C to 255°C. In a case where the polymerization temperature at the time of the polycondensation reaction is equal to or higher than the above-described lower limit value, the productivity of the polyester resin is improved. In a case where the polymerization temperature is equal to or lower than the above-described upper limit value, it is possible to suppress the decomposition of the polyester resin or the generation of a by-product of a volatile component that causes an odor, and it is possible to reduce total volatile organic compounds (TVOC).

In the second aspect of the present invention, the time of the esterification reaction and/or the transesterification reaction is preferably within 3 hours or less. During the esterification reaction and/or the transesterification reaction, water, lower alcohol, or the like is distilled from the reaction system in association with the reaction. Here, the phrase, "the reaction time of the esterification reaction and/or the transesterification reaction" refers to the time taken from the time when the distillate starts to come out to the completion of the distillation.

The polymerization end point is determined, for example, by the softening temperature of the polyester resin. For example, the polymerization may be completed after the polycondensation reaction is carried out until the torque of the stirring blades reaches a value indicating a desired softening temperature. Here, the phrase "the polymerization is completed" refers to that the stirring of the reaction container is stopped and nitrogen is introduced into the inside of the reaction container to set the pressure inside the container to normal pressure.

The polycondensation reaction time refers to the time taken from the time when the pressure reduction is started in a state where the reaction system is brought to the polycondensation reaction temperature, until the polymerization is completed.

The polyester resin obtained after cooling may be crushed to a desired size. Effect

The polyester resin according to the first aspect of the present invention described above is a polyester resin having favorable solvent solubility and a light tint while considering the environment and safety by reducing the using amount of the raw material derived from petroleum. Therefore, it can also be used for use applications such as a light-colored ink and a paint.

Moreover, the polyester resin according to the first aspect of the present invention uses PET as a part of the raw material. Since the PET already contains a constitutional unit derived from ethylene glycol, it is possible to reduce the using amount of ethylene glycol as a raw material monomer in a case of using the polyester resin according to the first aspect of the present invention. Ethylene glycol is a volatile organic compound (VOC), and in a case where unreacted ethylene glycol remains in the polyester resin, the ethylene glycol volatilizes when heat is applied, which causes an odor. However, in a case of using the polyester resin according to the first aspect of the present invention, it is possible to reduce the using amount of ethylene glycol, and thus it is possible to reduce TVOC, and it is possible to suppress odor. It is noted that ethylene glycol as a monomer generally does not remain in PET, VOC derived from PET is less likely to be generated.

A polyester resin according to a first aspect of the present invention can be widely used in a solvent-based ink and paint, an aqueous ink and paint, a powder paint, a toner, a solvent-based liquid developing material, an aqueous developing material, a viscous adhesive, and an image forming material.

According to the method of producing a polyester resin according to the second aspect of the present invention, it is possible to easily produce a polyester resin having favorable solvent solubility and a light tint while considering the environment and safety by reducing the using amount of the raw material derived from petroleum.

Moreover, since PET is used as a part of the raw material of the polyester resin, this PET serves as a starting point, whereby the esterification reaction and the transesterification reaction easily proceed, and the reaction time can be shortened.

[Examples]

Hereinafter, the present invention will be specifically described according to Examples. However, the present invention is not limited to Examples below. Measurement/evaluation methods
The measurement and evaluation methods for the polyester resin shown in the present examples are as follows.

Measurement of glass transition temperature and evaluation of preservability

Using a differential scanning calorimeter ("DSC-60", manufactured by Shimadzu Corporation), the glass transition temperature of the polyester resin was measured from the intersection point between the baseline of the chart at a temperature rising rate of 5 °C/min and the tangential line of the endothermic curve. 10 mg $\pm$ 0.5 mg of a measurement specimen was weighed in an aluminum pan, melted at 100°C for 10 minutes, and subjected to a quick cooling treatment using dry ice, which was subsequently used as a sample.
Further, based on the measurement results, the preservability was evaluated according to the following criteria.

Evaluation criteria

A: Tg is 50°C or higher.
B: Tg is 30°C or higher and lower than 50°C.
C: Tg is less than 30°C.

Measurement of softening temperature

For the softening temperature of the polyester resin, a flow tester ("CFT-500D", manufactured by Shimadzu Corporation) was used with a 1 mmcp $\times$ 10 mm nozzle at a load of 294 N and a constant temperature rise of a temperature rising rate of 3 °C/min, and a temperature at which a 1/2 amount of 1.0 g of the resin sample flowed out was measured, and this temperature was taken as the softening temperature.

Measurement of acid value

The acid value of the polyester resin was measured as follows.
About 0.2 g of a measurement sample was precisely weighed (a (g)) in an Erlenmeyer flask attached with a branch, 20 mL of benzyl alcohol was added thereto, followed by heating with a heater at 230°C for 15 minutes in a nitrogen atmosphere to dissolve the measurement sample. After allowed to be cooled to room temperature, 20 mL of chloroform and a few drops of a cresol red solution were added thereto, and titration was carried out with a 0.02 N KOH solution (titration amount = b (mL), titer of KOH solution = p). A blank measurement was carried out in the same manner (titration amount = c (mL)), and the acid value was calculated according to the following expression.

$$\text{Acid value (mgKOH/g)} = \{(b - c) \times 0.02 \times 56.11 \times p\}/a$$

Measurement of hydroxyl group value

The hydroxyl group value of the polyester resin was measured as follows.
About 5 g of a measurement sample was precisely weighed (a (g)) in an Erlenmeyer flask, and 50 mL of tetrahydrofuran was added thereto and dissolved by stirring with a stirrer. Next, 30 mL of a solution obtained by dissolving 5.000 g of dimethyl aminopyridine in tetrahydrofuran and adjusting the volume to 500 mL was added to an Erlenmeyer flask. Subsequently, 10 mL of a mixed solution of 22 mL of acetic acid anhydride and 200 mL of tetrahydrofuran was added thereto and stirred for 15 minutes to carry out acetylation. Next, 5 mL of distilled water was added thereto, and stirring was carried out for 15 minutes to hydrolyze the excess acetic acid anhydride into acetic acid. After 50 mL of tetrahydrofuran was added thereto, a few drops of phenolphthalein were added thereto, and titration was carried out with a 0.5 N KOH solution (titration amount = b (mL), titer of KOH = p). A blank measurement was carried out in the same manner (titration amount = c (mL)), and the hydroxyl group value was calculated according to the following expression.

$$\text{Hydroxyl group value (mgKOH/g)} = \{(c - b) \times 0.5 \times 56.11 \times p\}/a + \text{acid value}$$

Evaluation of color difference

Using a spectrocolorimeter CM-5 (manufactured by Konica Minolta, Inc.), the L value and the a value of the polyester resin were determined under the following conditions.

· Resin used: A resin having a particle diameter of 1 to 2 mm, which is obtained by fractionation with sieving
· Measurement condition: Measurement using a minute petri dish
Measurement type: Petri dish measurement
Measurement diameter: φ3 mm for a minute petri dish
SCI/SCE: SCE
· Observation conditions
Color system: Hunter Lab ΔE
Field of view: 2°
Main light source: C
Second light source: Absent
· Measurement method

A minute petri dish was filled with a resin, and the petri dish was rotated stepwise by 90° to carry out a total of 4 times of measurements. The measurement results were averaged to determine the L value and the a value.

Measurement of molecular weight

The molecular weight of the polyester resin was determined according to a GPC method as a polystyrene-equivalent value under the following conditions.

Apparatus: HLC8020, manufactured by Tosoh Corporation
Column: Three columns of TSKgel GMHXL (column size: 7.8 mm (ID) × 30.0 cm (L)), manufactured by Tosoh Corporation, are connected in series.
Oven temperature: 40°C
Eluent: tetrahydrofuran (THF)
Specimen concentration: 20 mg/10 mL
Filtration condition: A specimen solution is filtered with a 0.45 μm Teflon (registered trade name) membrane filter.
Flow rate: 1 mL/min
Injection volume: 0.1 mL
Detector: RI
Standard polystyrene specimens for creating calibration curve: TSK standard, manufactured by Tosoh Corporation, A-500 (molecular weight: $5.0 \times 10^2$), A-2500 (molecular weight: $2.74 \times 10^3$), F-2 (molecular weight: $1.96 \times 10^4$), F-20 (molecular weight: $1.9 \times 10^5$), F-40 (molecular weight: $3.55 \times 10^5$), F-80 (molecular weight: $7.06 \times 10^5$), F-128 (molecular weight: $1.09 \times 10^6$), F-288 (molecular weight: $2.89 \times 10^6$), F-700 (molecular weight: $6.77 \times 10^6$), F-2000 (molecular weight: $2.0 \times 10^7$).

Example 1

Production of polyester resin

With respect to 100 parts by mole of the acid component, 34 parts by mole (159.2 g) of PET-1, 60 parts by mole (242.9 g) of terephthalic acid, 6 parts by mole (28.1 g) of trimellitic acid anhydride, 65 parts by mole (570.1 g) of polyoxypropylene-(2.3)-2,2-bis(4-hydroxyphenyl)propane, 20 parts by mole (71.2 g) of isosorbide, and 500 ppm (0.215 g) of tetrabutoxy titanium as a catalyst with respect to the acid component were put into a reaction container equipped with a distillation column.
It is noted that in PET-1, assuming that PET-1 is 1 mol regarding a unit consisting of 1 mol of terephthalic acid and 1 mol of ethylene glycol, terephthalic acid derived from PET was counted to be 1 mol of the acid component per 1 mol of PET-1, and ethylene glycol derived from PET was counted to be 1 mol of the alcohol component per 1 mol of PET-1.

As the isosorbide, isosorbide of a raw material derived from biomass was used.

Next, the rotation speed of the stirring blades in the reaction container was maintained at 200 rpm, a temperature rise was started, the temperature inside the reaction system was raised to 265°C, and the esterification reaction was carried out while maintaining this temperature. The esterification reaction was completed at a time when the distillation of water from the reaction system did not occur anymore. The time taken from the time when water starts to flow out from the reaction system to the time when the esterification reaction is completed is shown in Table 1 as the "Time of esterification reaction and/or transesterification reaction".

Next, the temperature inside the reaction system was lowered and maintained at 235°C, the inside of the reaction container was depressurized over about 20 minutes to set the vacuum degree to 133 Pa, and the polycondensation reaction was carried out. The viscosity of the reaction system increased in association with the reaction, the vacuum degree was increased in association with the increase in viscosity, and the condensation reaction was carried out until the torque of the stirring blades reached a value indicating a desired softening temperature. Then, stirring was stopped at the time when a predetermined torque was exhibited, the reaction system was returned to the normal pressure, and the reactant was taken out from the reaction container by being pressurized with nitrogen to obtain a polyester resin. The time required for the polycondensation reaction (that is, the polycondensation reaction time) is shown in Table 1 as a "Polycondensation reaction".

The glass transition temperature, softening temperature, acid value, L value, a value, and MEK insoluble matter of the obtained polyester resin were measured. These results are each shown in Table 1 as Tg, T4, AV, L, a, and MEK insoluble matter.

It is noted that the polyester resin obtained in Example 1 contains a constitutional unit derived from terephthalic acid, a constitutional unit derived from trimellitic acid anhydride, a constitutional unit derived from polyoxypropylene-(2.3)-2,2-bis(4-hydroxyphenyl)propane, a constitutional unit derived from isosorbide, and a constitutional unit derived from ethylene glycol, and the proportion of each constitutional unit is, on the whole, the same as the proportion for the preparation.

That is, the polyester resin obtained in Example 1 contained 14.1% of carbon atoms derived from PET and contained 5.0% of carbon atoms derived from isosorbide.

Examples 2 to 6 and Comparative Examples 1 and 2

Production of polyester resin

A polyester resin was produced in the same manner as in Example 1, except that the composition proportion for the preparation, the esterification reaction time and/or the transesterification reaction time, and the polycondensation reaction time shown in Table 1 were changed, and then various measurements and evaluations were carried out. It is noted that in Example 5, succinic acid, propylene glycol, and glycerin, which were derived from biomass, were used in addition to isosorbide. The results thereof are shown in Table 1. In Example 6, PET-2, which is a recycled polyethylene terephthalate having an IV value of 0.73, was used instead of PET-1, where the PET-2 was obtained by reusing a used PET containing a small amount of a constitutional unit derived from isophthalic acid.

Example 7

Production of polyester resin

20 parts by mole (100.0 g) of PET-1, 30 parts by mole (129.7 g) of isophthalic acid, 50 parts by mole (153.6 g) of succinic acid, 40 parts by mole (79.2 g) of propylene glycol, 45 parts by mole (121.9 g) of erythritane, and 500 ppm (0.192 g) of tetrabutoxy titanium as a catalyst with respect to the acid component were put into a reaction container equipped with a distillation column.

The raw material mixture M put into the reaction container in Example 7 has 100 parts by mole of the acid component and 105 parts by mole of the alcohol component.

Among the monomers, those derived from biomass were used as succinic acid, propylene glycol, and erythritane.

Next, the rotation speed of the stirring blades in the reaction container was maintained at 200 rpm, a temperature rise was started, the temperature inside the reaction system was raised to 265°C, and the esterification reaction was carried out while maintaining this temperature. The esterification reaction was completed at a time when the distillation of water from the reaction system did not occur anymore.

Next, the temperature inside the reaction system was lowered and maintained at 235°C, the inside of the reaction container was depressurized over about 20 minutes to set the vacuum degree to 133 Pa, and the polycondensation reaction was carried out. The viscosity of the reaction system increased in association with the reaction, the vacuum degree was increased in association with the increase in viscosity, and the condensation reaction was carried out until the torque of the stirring blades reached a value indicating a desired softening temperature. Then, stirring was stopped at the time when a predetermined torque was exhibited, the reaction system was returned to the normal pressure, and the reactant was taken out from the reaction container by being pressurized with nitrogen to obtain a polyester resin.

The glass transition temperature, softening temperature, acid value, L value, a value, and MEK insoluble matter of the obtained polyester resin, as well as the hydroxyl group value, weight average molecular weight, number average molecular weight, and weight average molecular weight/number average molecular weight thereof were measured. These results are each shown in Table 2 as Tg, T4, AV, L, a, MEK insoluble matter, OHV, Mw, Mn, and Mw/Mn.

It is noted that the polyester resin obtained in Example 7 contains a constitutional unit derived from terephthalic acid, a constitutional unit derived from isophthalic acid, a constitutional unit derived from succinic acid, a constitutional unit derived from propylene glycol, a constitutional unit derived from erythritane, and a constitutional unit derived from ethylene glycol, and the proportion of each constitutional unit is, on the whole, the same as the composition proportion for the preparation.

That is, the polyester resin obtained in Example 7 contained 21.3% of carbon atoms derived from PET, 19.1% of carbon atoms derived from erythritane, 53.2 % of carbon atoms derived from the monomer derived from biomass containing erythritane, and 25.5% of carbon atoms derived from the raw material derived from petroleum, with respect to all carbon atoms constituting the polyester resin.

Examples 8 to 11 and Comparative Examples 1 and 2

Production of polyester resin

A polyester resin was produced in the same manner as in Example 7, except that the composition proportion for the preparation, the esterification reaction time and/or the transesterification reaction time, and the polycondensation reaction time as shown in Table 2 were changed, and then various measurements and evaluations were carried out. The results thereof are shown in Table 2.

Production of emulsion (phase inversion emulsification treatment)

Regarding each of the polyester resins obtained in Examples 4, 9, and 10, an emulsion was produced.

In a 200 ml beaker, 25 g of a polyester resin was dissolved in 75 g of MEK, and dimethylaminoethanol having an amount that makes it possible to neutralize carboxylic acids of the polyester resin to 120% was added to the beaker and was sufficiently blended. Next, 100 ml of pure water was put into a 300 ml round bottom flask, and the MEK solution described above was put thereinto, followed by treatment with a homogenizer at 8,000 rpm for 10 minutes.

Next, a flask cover, a stirring blade, and a cooling tube were attached, MEK was distilled off by reducing the pressure with an aspirator while carrying out heating to 70°C in a water bath to obtain an emulsion consisting of only water and a resin. The particle diameter of the obtained emulsion was measured using a laser diffraction/scattering-type particle size distribution analyzer (LA-960, manufactured by Horiba, Ltd.), and a median diameter was defined as the particle diameter of the emulsion. Table 1 shows the particle diameter of the emulsion in which the polyester resin of Example 4 was used, and Table 2 shows the particle diameters of the emulsions in which the polyester resins of Examples 9 and 10 were used.

Table 1

| | | | | Example 1 | Example 2 | Example 3 | Example 4 | Example 5 | Example 6 | Comparative Example 1 | Comparative Example 2 |
|---|---|---|---|---|---|---|---|---|---|---|---|
| Monomer composition | Polyvalent carboxylic acid | TPA | part by mole | 60 | 60 | 60 | 32 | | 60 | 94 | 40 |
| | | IPA | part by mole | | | | | 30 | | | |
| | | TMA | part by mole | 6 | 6 | 6 | 18 | | 6 | 6 | 2 |
| | | Bio-ScA | part by mole | | | | | 50 | | | |
| | Polyethylene terephthalate | PET-1 | part by mole | 34 | 34 | 34 | 50 | 20 | | | 58 |
| | | PET-2 | part by mole | | | | | | 34 | | |
| | Polyhydric alcohol | BPP | part by mole | 65 | 45 | 25 | 35 | | 45 | 65 | |
| | | Bio-EG | part by mole | | | | | | | 32 | |
| | | Bio-PG | part by mole | | | | | 35 | | | |
| | | Bio-GLY | part by mole | | | | | 5 | | | |
| | | Bio-isosorbide | part by mole | 20 | 40 | 60 | 50 | 45 | 40 | 20 | 40 |
| Ratio of carbon derived from PET | | | % | 14.1 | 162 | 19.1 | 25.2 | 19.4 | 162 | 0 | 50.1 |
| Ratio of carbon derived from constitutional unit derived from plant | | | % | 5 | 11.5 | 20.2 | 15.1 | 57.3 | 11.5 | 7.7 | 20.7 |
| Ratio of carbon derived from component having heterocycle | | | % | 5 | 11.5 | 20.2 | 15.1 | 26.2 | 11.5 | 5 | 20.7 |
| Esterification reaction and/or transesterification reaction | | Time | min | 140 | 150 | 150 | 120 | 70 | 140 | 220 | 120 |

(continued)

| | | | Example 1 | Example 2 | Example 3 | Example 4 | Example 5 | Example 6 | Comparative Example 1 | Comparative Example 2 |
|---|---|---|---|---|---|---|---|---|---|---|
| Polycondensation reaction | Time | min | 120 | 120 | 120 | 73 | 94 | 120 | 115 | 120 |
| Physical properties | Tg | °C | 73.9 | 80.6 | 93.7 | 80.2 | 54 | 797 | 74 | 103.8 |
| | T4 | °C | 128.2 | 125.6 | 144.3 | 135.9 | 110 | 124.2 | 122.5 | 164.4 |
| | AV | mgKOH/g | 4.9 | 10.1 | 11.3 | 8.6 | 10 | 11 | 7.4 | 27 |
| Color difference | L | | 43.84 | 47.83 | 47.60 | 51.71 | 47.19 | 48.33 | 47.44 | 32.70 |
| | a | | 2.23 | 1.44 | 1.59 | 0.03 | 1.20 | 1.30 | 3.85 | 2.55 |
| MEK insoluble matter | | % by mass | 0 | 0 | 1.2 | 0.3 | 0.6 | 0 | 0 | 10.1 |
| Particle diameter of emulsion | | nm | | | | 106 | | | | |
| Preservability | | | A | A | A | A | A | A | A | A |

EP 4 317 248 A1

Table 2

| | | | | Example 7 | Example 8 | Example 9 | Example 10 | Example 11 |
|---|---|---|---|---|---|---|---|---|
| Monomer composition | Polyvalent carboxylic acid | IPA | part by mole | 30 | 30 | 30 | 20 | |
| | | Bio-ScA | part by mole | 50 | 50 | 50 | 50 | 30 |
| | | Bio-FDCA | part by mole | | | | | 40 |
| | Polyethylene terephthalate | PET-1 | part by mole | 20 | 20 | 20 | 30 | 30 |
| | Polyhydric alcohol | Bio-PG | part by mole | 40 | 60 | 35 | 30 | 67 |
| | | Bio-GLY | part by mole | | 5 | 5 | | 5 |
| | | Bio-erythritane | part by mole | 45 | 20 | 45 | 45 | |
| Ratio of carbon derived from PET | | | % | 21.3 | 21.9 | 21.3 | 32.2 | 34.2 |
| Ratio of carbon derived from constitutional unit derived from plant | | | % | 53.2 | 51.9 | 53.2 | 50.5 | 65.8 |
| Ratio of carbon derived from component having heterocycle | | | % | 19.1 | 8.7 | 19.1 | 19.3 | 27.4 |
| Esterification reaction and/or transesterification reaction | | Time | min | 60 | 70 | 70 | 70 | 70 |
| Polycondensation reaction | | Time | min | 90 | 57 | 70 | 60 | 34 |
| Physical properties | | Tg | °C | 41.7 | 30.3 | 41.2 | 35 | 47.4 |
| | | T4 | °C | 996 | 96.4 | 107.2 | 87.1 | 118.7 |
| | | AV | mgKOH/g | 6.1 | 8.5 | 9.5 | 13.1 | 19.6 |
| | | OHV | mgKOH/g | 20 | 23.3 | 31.2 | 27.4 | 29.2 |
| Molecular weight | | Mw | GPC method/THF soluble fraction | 16,000 | 51,000 | 72,000 | 7,400 | 40,000 |
| | | Mn | | 2,500 | 2,600 | 2,300 | 2,000 | 2,000 |
| | | Mw/Mn | | 6.5 | 19.7 | 31.5 | 3.7 | 3.7 |
| Color difference | | L | | 47.53 | 52.53 | 49.89 | 46.92 | 47.44 |
| | | a | | -1.01 | -0.76 | -0.83 | -0.50 | -1.11 |
| MEK insoluble matter | | | % by mass | 0 | 0 | 0 | 0 | 0 |
| Particle diameter of emulsion | | | nm | | | | 110 | 130 |
| Preservability | | | | B | B | B | B | B |

The abbreviations in Tables 1 and 2 are as follows. In addition, blanks in the column of the monomer formulation in the table mean that the corresponding component is not blended (the blending amount is 0% by mass or 0 parts by mole).

· TPA: Terephthalic acid
· IPA: Isophthalic acid
· TMA: Trimellitic acid anhydride
· Bio-ScA: Succinic acid derived from biomass
· Bio-FDCA: 2,5-furandicarboxylic acid derived from biomass
· BPP: Polyoxypropylene-(2.3)-2,2-bis(4-hydroxyphenyl)propane
· Bio-E G: Ethylene glycol derived from biomass
· Bio-PG: Propylene glycol (1,2-propanediol) derived from biomass: derived from biomass
· Bio-GLY: Glycerin derived from biomass
· Bio-isosorbide: Isosorbide derived from biomass, manufactured by Roquette, PSA grade
· Bio-erythritane: Erythritane derived from biomass
· PET-1: Recycled polyethylene terephthalate having an IV value of 0.57, which is obtained by reusing a used PET
· PET-2: Recycled polyethylene terephthalate having an IV value of 0.73, which is obtained by reusing a used PET containing a small amount of a constitutional unit derived from isophthalic acid
As for the IV value of PET, a solution, which was obtained by dissolving 0.3 g of PET in 30 mL of a mixed solvent in which phenol and 1,1,2,2-tetrachloroethane have been mixed at a mass ratio of 1:1, was subjected to measurement at 30°C using an Ubbelohde viscometer.

As revealed from Tables 1 and 2, the polyester resin obtained in each of Examples was a polyester resin in which the ratio of carbon atoms derived from the monomer derived from petroleum was low and thus the environmental load was reduced. The polyester resin obtained in each of Examples was a polyester resin having favorable solvent solubility and having high lightness and low redness.

In addition, an emulsion was confirmed to be obtained by a phase inversion emulsification treatment. Such a polyester resin is also suitable for use in aqueous ink, coating, and the like.

On the other hand, the polyester resin of Comparative Example 1 in which PET has not been used was a resin having a long time for the esterification reaction and/or the transesterification reaction and having strong redness.

The polyester resin of Comparative Example 2 in which a large amount of PET was used had deteriorated solvent solubility.

[Industrial availability]

The polyester resin of the present invention is a polyester resin having favorable solvent solubility and a light tint while considering the environment and safety and thus is useful for use applications such as a light-colored ink and a paint as well.

**Claims**

1. A polyester resin comprising:

   a constitutional unit derived from at least one of a polyhydric alcohol derived from biomass and a polyvalent carboxylic acid derived from biomass; and
   a constitutional unit derived from polyethylene terephthalate,
   wherein a ratio of carbon atoms derived from the polyethylene terephthalate is 5% to 40% with respect to 100% of all carbon atoms, and
   a methyl ethyl ketone insoluble matter is 5% by mass or less,.

2. The polyester resin according to Claim 1,
   wherein the constitutional unit derived from the polyhydric alcohol derived from biomass is a constitutional unit derived from a polyhydric alcohol containing a heterocycle.

3. The polyester resin according to Claim 1 or 2,
   wherein the polyhydric alcohol derived from biomass is at least one of isosorbide and erythritane.

4. The polyester resin according to any one of Claims 1 to 3,

wherein the constitutional unit derived from the polyvalent carboxylic acid derived from biomass is a constitutional unit derived from a polyvalent carboxylic acid containing a heterocycle.

5. The polyester resin according to any one of Claims 1 to 4,
wherein the polyvalent carboxylic acid derived from biomass is at least one of succinic acid and 2,5-furandicarboxylic acid.

6. The polyester resin according to any one of Claims 1 to 5,
wherein a ratio of carbon atoms which are derived from the polyhydric alcohol derived from biomass and are derived from the polyvalent carboxylic acid derived from biomass is 1% to 95% with respect to all carbon atoms contained in the polyester resin.

7. The polyester resin according to any one of Claims 1 to 6,
wherein a ratio of carbon atoms which are derived from the polyhydric alcohol derived from biomass, are derived from the polyvalent carboxylic acid derived from biomass, and are derived from the polyethylene terephthalate is 6% to 100% with respect to all carbon atoms contained in the polyester resin.

8. The polyester resin according to any one of Claims 1 to 7,
wherein when the polyester resin having a particle diameter of 1 to 2 mm is fractionated by sieving and subjected to measurement with a spectrocolorimeter, an L value is 40 or more, and an a value is 2.4 or less.

9. A paint comprising:

the polyester resin according to any one of Claims 1 to 8, and
a solvent.

10. An ink comprising:
the polyester resin according to any one of Claims 1 to 8.

11. A viscous adhesive comprising:
the polyester resin according to any one of Claims 1 to 8.

12. An image forming material comprising:
the polyester resin according to any one of Claims 1 to 8.

13. A method of producing a polyester resin, comprising:

a reaction step that is at least one of an esterification reaction and a transesterification reaction, in which a raw material containing at least one of a polyhydric alcohol derived from biomass and a polyvalent carboxylic acid derived from biomass and containing polyethylene terephthalate is reacted in a presence of a titanium compound; and
a step of polycondensing a reactant obtained in the reaction step,
wherein a ratio of carbon atoms derived from the polyethylene terephthalate is 5% to 40% with respect to a total carbon atom amount of the raw material, and
at least a part of the reaction step is carried out at a temperature equal to or higher than a melting point of polyethylene terephthalate.

14. The production method according to Claim 13,
wherein the polyhydric alcohol derived from biomass is a polyhydric alcohol containing a heterocycle.

15. The production method according to Claim 14,
wherein the polyhydric alcohol derived from biomass is at least one of isosorbide and erythritane.

16. The production method according to Claim 13,
wherein the polyvalent carboxylic acid derived from biomass is a polyvalent carboxylic acid containing a heterocycle.

17. The production method according to Claim 16,
wherein the polyvalent carboxylic acid derived from biomass is at least one of succinic acid and 2,5-furandicarboxylic acid.

18. The production method according to any one of Claims 14 to 17, wherein a time of the reaction step is within 3 hours.

## INTERNATIONAL SEARCH REPORT

| International application No. |
| --- |
| **PCT/JP2022/012654** |

### A. CLASSIFICATION OF SUBJECT MATTER

*C08G 63/91*(2006.01)i; *C08G 63/12*(2006.01)i; *C08G 63/183*(2006.01)i; *C08G 63/42*(2006.01)i; *C08G 63/672*(2006.01)i;
*C08G 63/78*(2006.01)i; *C08G 63/85*(2006.01)i; *C09D 167/02*(2006.01)i; *C09J 167/02*(2006.01)i
FI:　C08G63/91 ZAB; C08G63/85; C09D167/02; C08G63/183; C08G63/78; C08G63/672; C08G63/42; C08G63/12;
C09J167/02

According to International Patent Classification (IPC) or to both national classification and IPC

### B. FIELDS SEARCHED

Minimum documentation searched (classification system followed by classification symbols)

C08G63/91; C08G63/12; C08G63/183; C08G63/42; C08G63/672; C08G63/78; C08G63/85; C09D167/02; C09J167/02

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | JP 2013-510917 A (CYTEC SURFACE SPECIALTIES, S.A) 28 March 2013 (2013-03-28) claims, paragraphs [0042], [0070], [0078]-[0079], example 1, etc. | 1-10, 12-18 |
| Y | claims, paragraphs [0042], [0070], [0078]-[0079], example 1, etc. | 11 |
| Y | WO 2019/176613 A1 (MITSUBISHI CHEM CORP) 19 September 2019 (2019-09-19) claims, paragraph [0002] | 11 |
| A | WO 2014/088097 A1 (MITSUBISHI RAYON CO., LTD.) 12 June 2014 (2014-06-12) | 1-18 |
| A | WO 2019/244797 A1 (MITSUBISHI CHEM CORP) 26 December 2019 (2019-12-26) | 1-18 |
| A | JP 2010-280995 A (TEIJIN FIBERS LTD) 16 December 2010 (2010-12-16) | 1-18 |
| P, A | JP 2022-014639 A (SEIKO EPSON CORP) 20 January 2022 (2022-01-20) | 1-18 |
| P, A | WO 2022/009793 A1 (MITSUBISHI CHEM CORP) 13 January 2022 (2022-01-13) | 1-18 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **16 May 2022** | **31 May 2022** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

<table>
<tr><td colspan="2" align="center">INTERNATIONAL SEARCH REPORT<br>Information on patent family members</td><td colspan="2">International application No.<br><br>**PCT/JP2022/012654**</td></tr>
</table>

| Patent document<br>cited in search report | Publication date<br>(day/month/year) | Patent family member(s) | Publication date<br>(day/month/year) |
|---|---|---|---|
| JP 2013-510917 A | 28 March 2013 | US 2012/0220676 A1<br>claims, paragraphs [0042],<br>[0076], [0084]-[0085],<br>example 1, etc.<br>WO 2011/058130 A1<br>EP 2325229 A1<br>CN 102597053 A<br>KR 10-2012-0100987 A<br>TW 201129603 A | |
| WO 2019/176613 A1 | 19 September 2019 | US 2020/0407493 A1<br>claims, paragraph [0003]<br>EP 3766915 A1<br>KR 10-2020-0118848 A<br>CN 111836845 A | |
| WO 2014/088097 A1 | 12 June 2014 | US 2015/0291730 A1<br>EP 2930566 A1<br>CN 104854514 A | |
| WO 2019/244797 A1 | 26 December 2019 | EP 3812413 A1<br>CN 112272682 A | |
| JP 2010-280995 A | 16 December 2010 | (Family: none) | |
| JP 2022-014639 A | 20 January 2022 | (Family: none) | |
| WO 2022/009793 A1 | 13 January 2022 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021047375 A
- JP 2021154388 A
- JP 2010285555 A
- JP 2002155133 A

- WO 2017533320 A
- JP 2010095696 A
- JP 2017533320 A